# EUROPEAN PATENT SPECIFICATION

(11) **EP 3 145 122 B1**
(45) Date of publication and mention of the grant of the patent: **19.09.2018**
(21) Application number: 14896615.3
(22) Date of filing: 30.06.2014
(51) Int. Cl.: H04L 12/715, H04L 12/717, H04L 12/723

(54) **PATH DETECTION METHOD AND PATH COMPUTATION ELEMENT**
PFADERKENNUNGSVERFAHREN UND PFADBERECHNUNGSELEMENT
PROCÉDÉ DE DÉTECTION DE CHEMIN ET ÉLÉMENT DE CALCUL DE CHEMIN

(43) Date of publication of application: 22.03.2017
(73) Proprietor: Huawei Technologies Co. Ltd., Shenzhen, Guangdong 518129 (CN)
(72) Inventor: ZHANG, Xian, Shenzhen Guangdong 518129 (CN)
(74) Representative: Thun, Clemens
(86) International application number: PCT/CN2014/081172
(87) International publication number: WO 2016/000132

(56) References cited:
- EP-A1- 2 073 462
- EP-A1- 2 487 841
- WO-A1-2008/046322
- CN-A- 1 462 152
- CN-A- 102 957 573
- CN-A- 103 428 045
- CN-A- 103 840 980
- WANG Z WANG X FU ZTE CORPORATION D: "Path Computation Element (PCE) Extensions for Inter-Layer Path Computation; draft-wdj-pce-for-inter-layer-path-computa tion-01.txt", PATH COMPUTATION ELEMENT (PCE) EXTENSIONS FOR INTER-LAYER PATH COMPUTATION; DRAFT-WDJ-PCE-FOR-INTER-LAYER-PATH-COMPUTA TION-01.TXT, INTERNET ENGINEERING TASK FORCE, IETF; STANDARDWORKINGDRAFT, INTERNET SOCIETY (ISOC) 4, RUE DES FALAISES CH- 1205 GENEV, no. 1, 26 October 2009 (2009-10-26), XP015065213, [retrieved on 2009-10-26]
- OKI UNIVERSITY OF ELECTRO-COMMUNICATIONS TOMONORI TAKEDA NTT J-L LE ROUX FRANCE TELECOM A FARREL OLD DOG CONSULTING E: "Framework for PCE-Based Inter-Layer MPLS and GMPLS Traffic Engineering; draft-ietf-pce-inter-layer-frwk-10.txt", FRAMEWORK FOR PCE-BASED INTER-LAYER MPLS AND GMPLS TRAFFIC ENGINEERING; DRAFT-IETF-PCE-INTER-LAYER-FRWK-10.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pce, no. 10, 1 March 2009 (2009-03-01), XP015061196,
- FARREL OLD DOG CONSULTING J-P VASSEUR CISCO SYSTEMS A ET AL: "A Path Computation Element (PCE)-Based Architecture; rfc4655.txt", NETWORK WORKING GROUP RFC 1717, INTERNET SOCIETY (ISOC) 4, RUE DES FALAISES CH- 1205 GENEVA, SWITZERLAND, CH, 1 August 2006 (2006-08-01), XP015047407, ISSN: 0000-0003
- XIAN ZHANG HAOMIAN ZHENG HUAWEI OSCAR GONZALES DE DIOS VICTOR LOPEZ TELEFONICA I+D: "Extensions to Path Computation Element Protocol (PCEP) to Support Resource Sharing-based Path Computation; draft-zhang-pce-resource-sharing-00.txt", EXTENSIONS TO PATH COMPUTATION ELEMENT PROTOCOL (PCEP) TO SUPPORT RESOURCE SHARING-BASED PATH COMPUTATION; DRAFT-ZHANG-PCE-RESOURCE-SHARING-00.TXT, INTERNET ENGINEERING TASK FORCE, IETF; STANDARDWORKINGDRAFT, INTERNET SOCIETY (ISOC) 4, RUE DES FALAIS, 14 February 2014 (2014-02-14), pages 1-14, XP015097218, [retrieved on 2014-02-14]

## Description

### TECHNICAL FIELD

The present invention relates to the field of network communications technologies, and in particular, to a path detection method and a path computation element.

### BACKGROUND

In a multi-layer network, an upper-layer network needs to establish a path by using a resource of a lower-layer network, to carry a service of the upper-layer network. Multiple paths used to carry the service of the upper-layer network need to share a network resource. Therefore, only one of the multiple paths may be established at the same time. According to different requirements, the upper-layer network needs to detect whether another path that is not established is available, to determine whether to establish another path, and switches from a previous path to a new path to carry the service, so that the service is carried on an optimal path.

For example, the document "Path Computation Element (PCE) Extensions for InterLayer Path Computation", Wang Z Wang FU, Draft-WDJ-PCE-INTER-LAYER-PATH-COMPUTATION-01.TXT, Internet engineering task force, IETF, Internet Society refers to a path computation element extensions for inter layer path computation.

Further, EP 2 487 841A1 refers to a method for controlling an area boundary. Further, WO 2008/046322A1 refers to a distributed PCE based system and architecture in a multi layer network.

In the prior art, a first node of a service detects paths one by one by using the Resource Reservation Protocol (RSVP, Resource Reservation Protocol), and for each path, detection signaling sent by the first node needs to be processed hop by hop. In this way, when many paths need to be detected, detection efficiency is relatively low, a large quantity of signaling messages are transferred, and network resources are wasted.

### SUMMARY

In a first aspect a path detection method performed by a path computation element, PCE, of a lower-layer network, is provided, wherein the method comprises:
- receiving a path detection request sent by an upper-layer network, wherein the path detection request carries path information identifying multiple to-be-detected paths;
- in response to the path detection request, determining the multiple to-be-detected paths according to the path information, and detecting whether the multiple to-be-detected paths are available, wherein the method further comprises:
- updating a detection result in real time by regularly detecting whether each of the multiple to-be-detected paths is available,
- wherein the path detection request further carries priorities of the multiple to-be-detected paths and a path detection feedback condition, being that the updated detection result is to be fed back when a to-be-detected path among the multiple to-be-detected paths whose priority is higher than a priority of a Label Switched Path, LSP, currently carrying a service is available, and feeding back the updated detection result to the upper-layer network when the updated detection result satisfies the feedback condition.

In a second aspect a path detection method performed by a path computation element, PCE, of a lower layer network is provided, wherein the method comprises:
- receiving a path detection request sent by an upper-layer network, wherein the path detection request carries path information identifying multiple to-be-detected paths; and
- in response to the path detection request, determining the multiple to-be-detected paths according to the path information, and detecting whether the multiple to-be-detected paths are available,
   wherein the method further comprises:
   updating a detection result in real time by regularly detecting whether each of the multiple to-be-detected paths is available,
- wherein the path detection request further carries a first target identifier used to indicate a target to-be-detected path among the multiple to-be-detected paths and a path detection feedback condition, being that the updated detection result is fed back when an available status of the target to-be-detected path determined by using the first target identifier changes, and feeding back the updated detection result to the upper-layer network when the updated detection result satisfies the feedback condition.

In a third aspect a path detection method performed by a path computation element, PCE, of a lower layer network is provided, wherein the method comprises:
- receiving a path detection request sent by an upper-layer network, wherein the path detection request carries path information identifying multiple to-be-detected paths; and
- in response to the path detection request, determining the multiple to-be-detected paths according to the path information, and detecting whether the multiple to-be-detected paths are available,
   wherein the method further comprises:
- updating a detection result in real time by regularly detecting whether each of the multiple the to-be-detected path is available,
- wherein the path detection request further carries a target quantity and a path detection feedback condition, being that the updated detection result is to be fed back to the upper-layer network when a quantity of the available to-be-detected paths is greater than or equal to the target quantity, and feeding back the updated detection result to the upper-layer network when the updated detection result satisfies the feedback condition.

In a first implementation form of any of the first to third aspects the path information comprises a label switched path LSP identifier; and
the determining multiple to-be-detected paths comprises a determination of a to-be detected path according the LSP identifier, and
the detecting whether multiple to-be-detected paths are available comprises detecting whether the to-be detected path is available, which comprises determining an LSP according to the LSP identifier, and detecting whether the LSP is available.

In a second implementation form of any of the first to third aspects the detecting whether the LSP is available specifically comprises:
Learning by querying an LSP status database of the PCE, whether the LSP is available; or
the detecting whether the LSP is available specifically comprises:
   sending to a first node of the lower-layer network in which the LSP is located, a request message for requesting to obtain a status of the LSP;
   receiving the status of the LSP that is fed back by the first node of the lower-layer network in which the LSP is located; and
   learning according to the status of the LSP, whether the LSP is available.

In a third implementation form of any of the first to third aspects the path information comprises a node pair identifier being an identifier of a node pair of the upper-layer network, or an identifier of a border node pair of the lower-layer network connected to a node pair of the upper-layer network.

In a fourth aspect a path computation element is provided, wherein the path computation element is configured and intended to perform any of the above methods.

It may be seen from the foregoing technical solutions that, according to the path detection method and the path computation element of this application, a path computation element PCE of a lower-layer network receives a path detection request sent by an upper-layer network, where the path detection request carries path information identifying multiple to-be-detected paths; and in response to the path detection request, the PCE determines the multiple to-be-detected paths according to the path information, and detects whether the multiple to-be-detected paths are available, so that multiple paths can be simultaneously detected, thereby improving detection efficiency, simplifying signaling exchange, and greatly reducing network resources.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a multi-layer network according to this application;
FIG. 2 is a flowchart of Embodiment 1 of a path detection method according to this application;
FIG. 3 is a flowchart of Embodiment 2 of a path detection method according to this application;
FIG. 4 is a flowchart of Embodiment 3 of a path detection method according to this application;
FIG. 5 is a flowchart of Embodiment 4 of a path detection method according to this application;
FIG. 6 is a structural diagram of Embodiment 1 of a path computation element according to this application;
FIG. 7 is a structural diagram of Embodiment 2 of a path computation element according to this application;
FIG. 8 is a structural diagram of Embodiment 3 of a path computation element according to this application;
FIG. 9 is a structural diagram of Embodiment 4 of a path computation element according to this application; and
FIG. 10 is a structural diagram of a computation node according to this application.

### DESCRIPTION OF EMBODIMENTS

To make the invention objectives, features, and advantages of the present invention clearer and more comprehensible, the following clearly and completely describes the technical solutions in the embodiments of the present invention with reference to the accompanying drawings in the embodiments of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

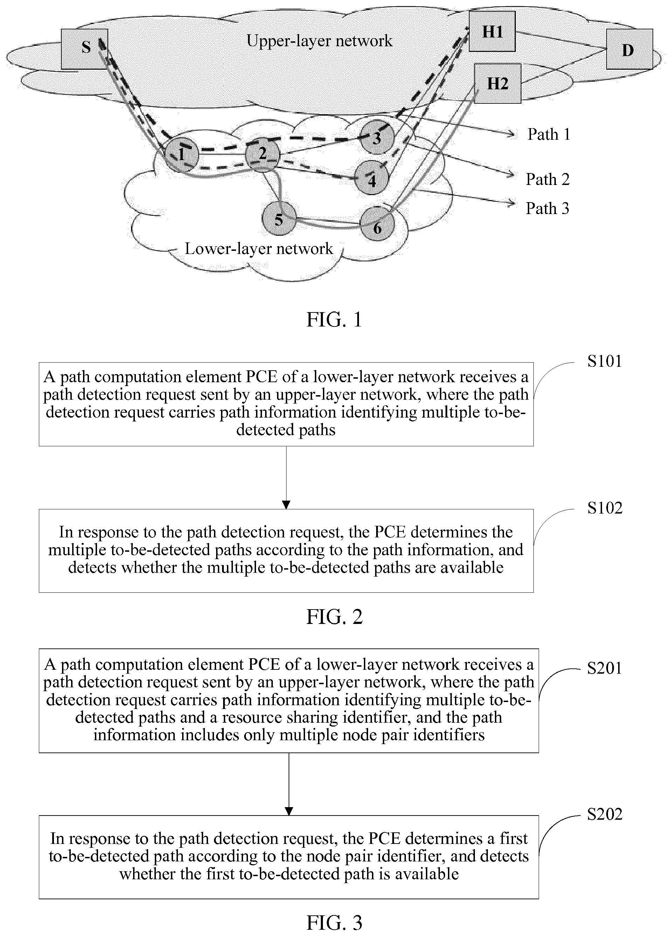

In the prior art, a first node of a service detects paths one by one by using the Resource Reservation Protocol (RSVP, Resource Reservation Protocol), and for each path, detection signaling sent by the first node needs to be processed hop by hop. Using a multi-layer network shown in FIG. 1 as an example, it is assumed that an S-D service is currently carried on a path 3, and an upper-layer network needs to detect whether resources corresponding to a path 1 and a path 2 are available. In the prior art, the upper-layer network performs detection by using the RSVP, that is, detection signaling is an RSVP message. All paths need to be detected one by one by using the detection signaling. Specifically, using an example in which the path 1 is first detected, a first node S sends an RSVP message to a node 1, the node 1 sends the RSVP message (carrying information indicating whether the node 1 is available) to a node 2, the node 2 sends the RSVP message (carrying information indicating whether the node 1 and the node 2 are available) to a node 3, the node 3 sends the RSVP message (carrying information indicating whether the node 1, the node 2, and the node 3 are available) to a node H1, and then the node H1 sends the RSVP message (carrying information indicating whether the node 1, the node 2, the node 3, and the node H1 are available) to a node D, to finally determine whether the path 1 is available. After the path 1 is detected completely, the path 2 is detected. Detection of the path 2 is similar to detection of the path 1: The first node S sends the RSVP message to the node 1, the node 1 sends the RSVP message (carrying the information indicating whether the node 1 is available) to the node 2, the node 2 sends the RSVP message (carrying the information indicating whether the node 1 and the node 2 are available) to a node 4, the node 4 sends the RSVP message (carrying information indicating whether the node 1, the node 2, and the node 4 are available) to the node H1, and then the node H1 sends the RSVP message (carrying information indicating whether the node 1, the node 2, the node 4, and the node H1 are available) to the node D, to finally determine whether the path 2 can be established. In this way, when many paths need to be detected, detection efficiency is relatively low, a large quantity of signaling messages are transferred, and network resources are wasted.

Therefore, an implementation manner of this application discloses a path detection method and a path computation element. A path computation element PCE of a lower-layer network receives a path detection request sent by an upper-layer network, where the path detection request carries path information identifying multiple to-be-detected paths; and in response to the path detection request, the PCE determines the multiple to-be-detected paths according to the path information, and detects whether the multiple to-be-detected paths are available, so that multiple paths can be simultaneously detected, thereby improving detection efficiency, simplifying signaling exchange, and greatly reducing network resources.

Referring to FIG. 2, FIG. 2 is a flowchart of Embodiment 1 of a path detection method according to this application. As shown in FIG. 2, the method may include:
S101: A path computation element PCE of a lower-layer network receives a path detection request sent by an upper-layer network, where the path detection request carries path information identifying multiple to-be-detected paths.

The upper-layer network may send the path detection request to the PCE of the lower-layer network by using a first node or an upper-layer PCE, to request a lower-layer PCE to detect resources corresponding to the multiple to-be-detected paths. The path information includes a node pair identifier and/or a label switched path LSP identifier.

It should be noted that, the path detection request may be transferred by a new object that is defined by using a PCNtf (Path Computation Notification) message or a PCReq (Path Computation Request) message. If the node pair identifier is transferred, it indicates that the upper-layer network expects to learn whether a path can be established between the two nodes.

It should be further noted that, the node pair identifier and the LSP identifier have multiple forms, for example, the LSP identifier may be a quintuple of an LSP, or may be an identifier that can be identified by another upper-layer network. The node pair identifier may be an identifier of a node pair of the upper-layer network, or an identifier of a border node pair of the lower-layer network connected to a node pair of the upper-layer network, which is not limited in this embodiment.

S102: In response to the path detection request, the PCE determines the multiple to-be-detected paths according to the path information, and detects whether the multiple to-be-detected paths are available. After the PCE of the lower-layer network receives the path detection request sent by the upper-layer network, in response to the path detection request, when the path information includes the node pair identifier, the PCE of the lower-layer network determines a to-be-detected path according to the node pair identifier, and detects whether the to-be-detected path is available, or when the path information includes the LSP identifier, the PCE of the lower-layer network determines a to-be-detected path according to the LSP identifier, and detects whether the to-be-detected path is available.

This embodiment discloses a path detection method. A path computation element PCE of a lower-layer network receives a path detection request sent by an upper-layer network, where the path detection request carries path information identifying multiple to-be-detected paths; and in response to the path detection request, the PCE determines the multiple to-be-detected paths according to the path information, and detects whether the multiple to-be-detected paths are available, so that multiple paths can be simultaneously detected, thereby improving detection efficiency, simplifying signaling exchange, and greatly reducing network resources.

To better understand the technical solutions in the embodiments of the present invention, referring to FIG. 3, FIG. 3 is a flowchart of Embodiment 2 of a path detection method according to this application. As shown in FIG. 3, the method may include:
S201: A path computation element PCE of a lower-layer network receives a path detection request sent by an upper-layer network, where the path detection request carries path information identifying multiple to-be-detected paths and a resource sharing identifier, and the path information includes only multiple node pair identifiers.
S202: In response to the path detection request, the PCE determines a first to-be-detected path according to the node pair identifier, and detects whether the first to-be-detected path is available. Specifically, the PCE determines, according to the resource sharing identifier, resource sharing between the multiple to-be-detected paths;
   the PCE computes, according to an available resource of the lower-layer network and a resource occupied by another to-be-detected path other than the first to-be-detected path, a path between two nodes indicated by the node pair identifier; and
   the PCE detects whether the computed path is available, to determine whether the first to-be-detected path is available.

It should be noted that, the path information may include multiple node pair identifiers; in this case, the multiple node pair identifiers need to be processed according to a preset sequence. Specifically, an action described in step S202 may be performed on each node pair identifier according to an order in the path information, a node pair priority, or the like.

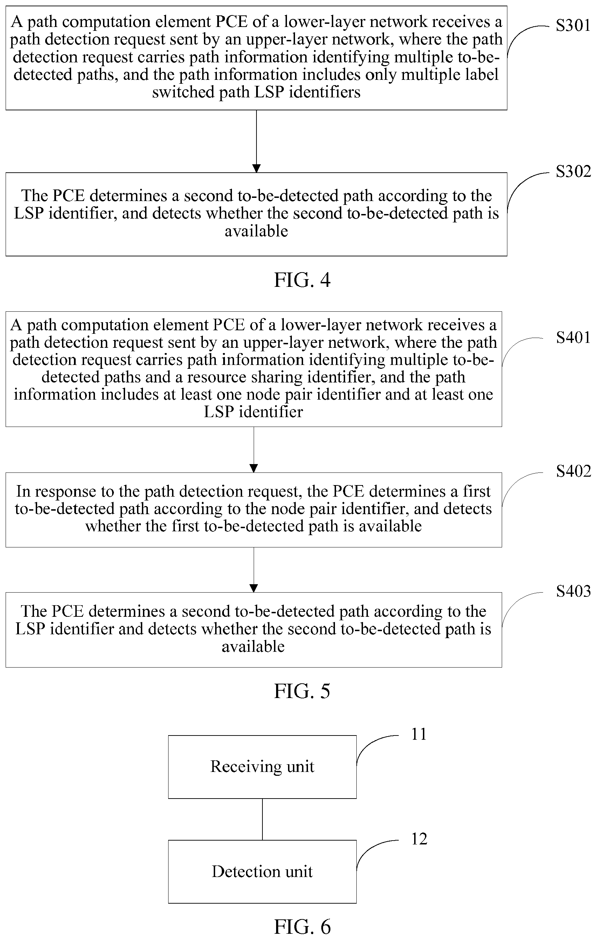

To better understand the technical solutions in the embodiments of the present invention, referring to FIG. 4, FIG. 4 is a flowchart of Embodiment 3 of a path detection method according to this application. As shown in FIG. 4, the method may include:
S301: A path computation element PCE of a lower-layer network receives a path detection request sent by an upper-layer network, where the path detection request carries path information identifying multiple to-be-detected paths, and the path information includes only multiple label switched path LSP identifiers.
S302: The PCE determines a second to-be-detected path according to the LSP identifier, and detects whether the second to-be-detected path is available.

Specifically, the PCE determines an LSP according to the LSP identifier, and detects whether the LSP is available.

The detecting whether the LSP is available specifically includes:
learning, by the PCE by querying an LSP status database of the PCE, whether the LSP is available; or
the detecting whether the LSP is available specifically includes:
   sending, by the PCE, to a first node of the lower-layer network in which the LSP is located, a request message for requesting to obtain a status of the LSP;
   receiving, by the PCE, the status of the LSP that is fed back by the first node of the lower-layer network in which the LSP is located; and
   learning, by the PCE according to the status of the LSP, whether the LSP is available.

To better understand the technical solutions in the embodiments of the present invention, referring to FIG. 5, FIG. 5 is a flowchart of Embodiment 4 of a path detection method according to this application. As shown in FIG. 5, the method may include:
S401: A path computation element PCE of a lower-layer network receives a path detection request sent by an upper-layer network, where the path detection request carries path information identifying multiple to-be-detected paths and a resource sharing identifier, and the path information includes at least one node pair identifier and at least one label switched path LSP identifier.
S402: In response to the path detection request, the PCE determines a first to-be-detected path according to the node pair identifier, and detects whether the first to-be-detected path is available.
   It should be noted that, for specific implementation of this step, reference may be made to step S202 in Method Embodiment 2, which is not described in detail again in this embodiment.
S403: The PCE determines a second to-be-detected path according to the LSP identifier and detects whether the second to-be-detected path is available.

It should be noted that, for specific implementation of this step, reference may be made to step S302 in Method Embodiment 3, which is not described in detail again in this embodiment.

It should be further noted that an order of performing step S402 and step S403 is not limited in this embodiment.

After detecting the to-be-detected path completely, the PCE of the lower-layer network may further feed back a detection result indicating whether the detected path is available to the upper-layer network. Specifically, the detection result may be fed back by using a PCNtf message or a PCReq message.

It should be noted that, the PCE of the lower-layer network may further update the detection result in real time by regularly detecting whether the to-be-detected path is available. The regular detection described herein may be active and periodic, or may be passive, which is not limited in this embodiment.

It should be further noted that, the detection request may further carry a path detection feedback condition. The updated detection result is fed back to the upper-layer network when the updated detection result satisfies the feedback condition. Specifically, several examples of the feedback condition in the solution are provided as follows:
the first one is that when the path detection request further carries priorities of the multiple to-be-detected paths, the updated detection result is fed back when the to-be-detected path whose priority is higher than a priority of an LSP currently carrying a service is available;
the second one is that when the path detection request further carries a first target identifier used to indicate a target to-be-detected path, the updated detection result is fed back when an available status of the target to-be-detected path determined by using the first target identifier changes; and
the third one is that when the path detection request further carries a target quantity, the updated detection result is fed back when a quantity of the available to-be-detected paths is greater than or equal to the target quantity.

Further, the present invention is not limited to the foregoing three feedback conditions, and another feedback condition that can be applied to the solution also falls within the protection scope of the present invention.

After receiving the detection result fed back by the PCE of the lower-layer network, a first node or a PCE of the upper-layer network determines whether an LSP carrying a service needs to be changed, and if yes, establishes a new path to carry the service. For example, the LSP currently carrying the service may be deleted by sending an RSVP-TE message, then a new path is established by sending the RSVP-TE message, and after the foregoing process is completed, the service is carried on the new path.

In addition, an embodiment of this application further provides a path computation element, and the following provides detailed descriptions by means of the following embodiment.

Referring to FIG. 6, FIG. 6 is a schematic structural diagram of Embodiment 1 of a path computation element according to this application. The path computation element specifically includes:
a receiving unit 11, configured to receive a path detection request sent by an upper-layer network, where the path detection request carries path information identifying multiple to-be-detected paths; and
a detection unit 12, configured to: in response to the path detection request, determine the multiple to-be-detected paths according to the path detection request information, and detect whether the multiple to-be-detected paths are available.

It should be noted that, specific function implementation of the foregoing units is already described in detail in the method embodiment part, and for details, reference may be made to related descriptions in the method embodiments, which is not described in detail in this embodiment.

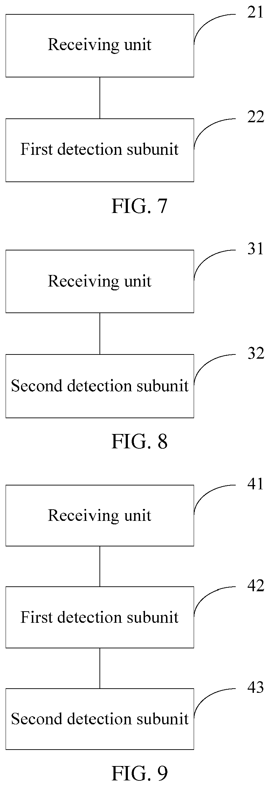

To better understand the technical solutions in the embodiments of the present invention, referring to FIG. 7, FIG. 7 is a schematic structural diagram of Embodiment 2 of a path computation element according to this application. The path computation element specifically includes:
a receiving unit 21, configured to receive a path detection request sent by an upper-layer network, where the path detection request carries path information identifying multiple to-be-detected paths, the path detection request further carries a resource sharing identifier, and the path information includes only a node pair identifier, where
the node pair identifier is an identifier of a node pair of the upper-layer network, or an identifier of a border node pair of a lower-layer network connected to a node pair of the upper-layer network; and
a first detection subunit 22, configured to determine a first to-be-detected path according to a node pair identifier, and detect whether the first to-be-detected path is available.

The first detection subunit is specifically configured to:
determine, according to the resource sharing identifier, resource sharing between the multiple to-be-detected paths;
compute, according to an available resource of a lower-layer network and a resource occupied by another to-be-detected path other than the first to-be-detected path, a path between two nodes indicated by the node pair identifier; and
detect whether the computed path is available, to determine whether the first to-be-detected path is available.

It should be noted that, specific function implementation of the foregoing units is already described in detail in the method embodiment part, and for details, reference may be made to related descriptions in the method embodiments, which is not described in detail in this embodiment.

To better understand the technical solutions in the embodiments of the present invention, referring to FIG. 8, FIG. 8 is a schematic structural diagram of Embodiment 3 of a path computation element according to this application. The path computation element specifically includes:
a receiving unit 31, configured to receive a path detection request sent by an upper-layer network, where the path detection request carries path information identifying multiple to-be-detected paths, and the path information includes only a label switched path LSP identifier; and
a second detection subunit 32, configured to determine a second to-be-detected path according to the LSP identifier, and detect whether the second to-be-detected path is available.

The second detection subunit specifically includes:
a determining unit, configured to determine an LSP according to the LSP identifier; and
an LSP detection unit, configured to detect whether the LSP is available.

The LSP detection unit is specifically configured to:
learn, by querying an LSP status database of the LSP detection unit, whether the LSP is available; or
the LSP detection unit is specifically configured to:
   send, to a first node of the lower-layer network in which the LSP is located, a request message for requesting to obtain a status of the LSP;
   receive the status of the LSP that is fed back by the first node of the lower-layer network in which the LSP is located; and
   learn, according to the status of the LSP, whether the LSP is available.

It should be noted that, specific function implementation of the foregoing units is already described in detail in the method embodiment part, and for details, reference may be made to related descriptions in the method embodiments, which is not described in detail in this embodiment.

To better understand the technical solutions in the embodiments of the present invention, referring to FIG. 9, FIG. 9 is a schematic structural diagram of Embodiment 4 of a path computation element according to this application. The path computation element specifically includes:
a receiving unit 41, configured to receive a path detection request sent by an upper-layer network, where the path detection request carries path information identifying multiple to-be-detected paths and a resource sharing identifier, and the path information includes at least one node pair identifier and at least one label switched path LSP identifier; and
a first detection subunit 42, configured to determine a first to-be-detected path according to a node pair identifier, and detect whether the first to-be-detected path is available; and
a second detection subunit 43, configured to determine a second to-be-detected path according to the LSP identifier, and detect whether the second to-be-detected path is available.

It should be noted that, specific function implementation of the foregoing units is already described in detail in the method embodiment part, and for details, reference may be made to related descriptions in the method embodiments, which is not described in detail in this embodiment.

The path computation element further includes:
a feedback unit, configured to feed back a detection result indicating whether the to-be-detected path is available to the upper-layer network; and
an update unit, configured to update the detection result in real time by regularly detecting whether the to-be-detected path is available.

The path detection request further carries a path detection feedback condition, and the feedback unit is specifically configured to:
feed back the updated detection result to the upper-layer network when the updated detection result satisfies the feedback condition.

The path detection request further carries priorities of the multiple to-be-detected paths, and the path detection feedback condition specifically includes:
feeding back the updated detection result when a to-be-detected path whose priority is higher than a priority of an LSP currently carrying a service is available.

The path detection request further carries a first target identifier used to indicate a target to-be-detected path, and the path detection feedback condition specifically includes:
feeding back the updated detection result when an available status of the target to-be-detected path determined by using the first target identifier changes.

The path detection request further carries a target quantity, and the path detection feedback condition specifically includes:
feeding back the updated detection result when a quantity of the available to-be-detected paths is greater than or equal to the target quantity.

It should be noted that, specific function implementation of the foregoing units is already described in detail in the method embodiment part, and for details, reference may be made to related descriptions in the method embodiments, which is not described in detail in this embodiment.

In addition, an embodiment of this application further provides a computation node, where the computation node may a host server having a computing capability, or a personal computer PC, or a portable computer or terminal that is portable, or the like, and specific implementation of the computation node is not limited in a specific embodiment of this application.

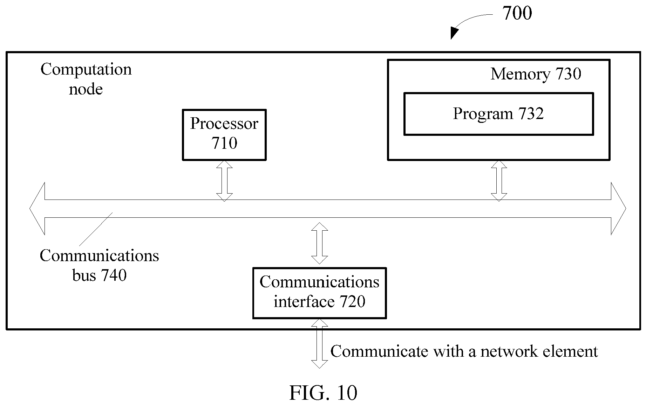

FIG. 10 is a structural diagram of a computation node 700 according to this application. As shown in FIG. 10, the computation node 700 includes:
a processor (Processor) 710, a communications interface (Communications Interface) 720, a memory (Memory) 730, and a communications bus 740.

The processor 710, the communications interface 720, and the memory 730 communicate with each other by using the communication bus 740.

The processor 710 is configured to execute a program 732.

Specifically, the program 732 may include program code, and the program code includes a computer operation instruction. The instruction is used to indicate to complete the path detection method disclosed in any embodiment of Method Embodiment 1 to Method Embodiment 4.

The processor 710 may be a central processing unit CPU, or an application specific integrated circuit ASIC (Application Specific Integrated Circuit), or one or more integrated circuits configured to implement the embodiments of this application.

The memory 730 is configured to store the program 732. The memory 730 may include a high speed RAM memory, or may include a non-volatile memory (non-volatile memory), for example, at least one magnetic disk storage.

The embodiments in this specification are all described in a progressive manner, for same or similar parts in the embodiments, reference may be made to these embodiments, and each embodiment focuses on a difference from other embodiments. The apparatus disclosed in the embodiments is described relatively simply because it corresponds to the method disclosed in the embodiments, and for portions related to those of the method, reference may be made to the description of the method. A person skilled in the art may further be aware that, in combination with the examples described in the embodiments disclosed in this specification, units and algorithm steps may be implemented by electronic hardware or a combination of computer software and electronic hardware. To clearly describe the interchangeability between the hardware and the software, the foregoing has generally described compositions and steps of each example according to functions. Whether the functions are performed by hardware or software and hardware depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art. The embodiments disclosed above are described to enable a person skilled in the art to implement or use the present invention. Various modifications to the embodiments are obvious to the person skilled in the art, and general principles defined in this specification may be implemented in other embodiments without departing from the scope of the present invention. Therefore, the present invention will not be limited to the embodiments described in this specification but extends to the widest scope that complies with the principles and novelty disclosed in this specification.

## Claims

1. A path detection method performed by a path computation element, PCE, of a lower-layer network, wherein the method comprises:
• receiving a path detection request sent by an upper-layer network, wherein the path detection request carries path information identifying multiple to-be-detected paths (S 201);
• in response to the path detection request, determining the multiple to-be-detected paths according to the path information, and detecting whether the multiple to-be-detected paths are available (S 202), wherein the method further comprises:
• updating a detection result in real time by regularly detecting whether each of the multiple to-be-detected paths is available,
• wherein the path detection request further carries priorities of the multiple to-be-detected paths and a path detection feedback condition, being that the updated detection result is to be fed back when a to-be-detected path among the multiple to-be-detected paths whose priority is higher than a priority of a Label Switched Path, LSP, currently carrying a service is available, and feeding back the updated detection result to the upper-layer network when the updated detection result satisfies the feedback condition.

2. A path detection method performed by a path computation element, PCE, of a lower layer network, wherein the method comprises:
• receiving a path detection request sent by an upper-layer network, wherein the path detection request carries path information identifying multiple to-be-detected paths (S101); and
• in response to the path detection request, determining the multiple to-be-detected paths according to the path information, and detecting whether the multiple to-be-detected paths are available (S102), wherein the method further comprises:
• updating a detection result in real time by regularly detecting whether each of the multiple to-be-detected paths is available,
• wherein the path detection request further carries a first target identifier used to indicate a target to-be-detected path among the multiple to-be-detected paths and a path detection feedback condition, being that the updated detection result is fed back when an available status of the target to-be-detected path determined by using the first target identifier changes, and feeding back the updated detection result to the upper-layer network when the updated detection result satisfies the feedback condition.

3. A path detection method performed by a path computation element, PCE, of a lower layer network, wherein the method comprises:
• receiving a path detection request sent by an upper-layer network, wherein the path detection request carries path information identifying multiple to-be-detected paths (S101); and
• in response to the path detection request, determining the multiple to-be-detected paths according to the path information, and detecting whether the multiple to-be-detected paths are available (S102), wherein the method further comprises:
• updating a detection result in real time by regularly detecting whether each of the multiple the to-be-detected path is available,
• wherein the path detection request further carries a target quantity and a path detection feedback condition, being that the updated detection result is to be fed back to the upper-layer network when a quantity of the available to-be-detected paths is greater than or equal to the target quantity, and feeding back the updated detection result to the upper-layer network when the updated detection result satisfies the feedback condition.

4. The method according to any of claims 1 - 3, wherein the path information comprises a label switched path LSP identifier; and
the determining multiple to-be-detected paths comprises a determination of a to-be detected path according the LSP identifier, and
the detecting whether multiple to-be-detected paths are available comprises detecting whether the to-be detected path is available, which comprises determining an LSP according to the LSP identifier, and detecting whether the LSP is available.

5. The method according to claim 4, wherein the detecting whether the LSP is available specifically comprises:
Learning by querying an LSP status database of the PCE, whether the LSP is available; or
the detecting whether the LSP is available specifically comprises:
sending to a first node of the lower-layer network in which the LSP is located, a request message for requesting to obtain a status of the LSP;
receiving the status of the LSP that is fed back by the first node of the lower-layer network in which the LSP is located; and
learning according to the status of the LSP, whether the LSP is available.

6. The method according to claim 1, wherein the path information comprises a node pair identifier being an identifier of a node pair of the upper-layer network, or an identifier of a border node pair of the lower-layer network connected to a node pair of the upper-layer network.

7. A path computation element, wherein the path computation element is configured and intended to perform any of the methods according to claims 1 - 6.

## Patentansprüche

1. Pfaderkennungsverfahren, das durch ein Pfadberechnungselement, PCE, eines Netzwerks einer unteren Schicht durchgeführt wird, wobei das Verfahren umfasst:
• Empfangen einer Pfaderkennungsanfrage, die von einem Netzwerk einer oberen Schicht gesendet wird, wobei die Pfaderkennungsanfrage Pfadinformationen trägt, die mehrere zu erkennende Pfade identifizieren (S 201);
• in Antwort auf die Pfaderkennungsanfrage, Bestimmen der mehreren zu erkennenden Pfade gemäß den Pfadinformationen und Erkennen, ob die mehreren zu erkennenden Pfade verfügbar sind (S 202),
wobei das Verfahren ferner umfasst:
• Aktualisieren eines Erkennungsergebnisses in Echtzeit durch regelmäßiges Erkennen, ob jeder der mehreren zu erkennenden Pfade verfügbar ist,
• wobei die Pfaderkennungsanfrage ferner Prioritäten der mehreren zu erkennenden Pfade und eine Pfaderkennungsrückmeldungsbedingung trägt, die besagt, dass das aktualisierte Erkennungsergebnis zurückzumelden ist, wenn ein zu erkennender Pfad unter den mehreren zu erkennenden Pfaden, dessen Priorität höher als eine Priorität eines "Label Switched Path", LSP, ist, der momentan einen Dienst trägt, verfügbar ist, und eine Rückmeldung des aktualisierten Erkennungsergebnisses zum Netzwerk der oberen Schicht erfolgt, wenn das aktualisierte Erkennungsergebnis die Rückmeldungsbedingung erfüllt.

2. Pfaderkennungsverfahren, das durch ein Pfadberechnungselement, PCE, eines Netzwerks einer unteren Schicht durchgeführt wird, wobei das Verfahren umfasst:
• Empfangen einer Pfaderkennungsanfrage, die von einem Netzwerk einer oberen Schicht gesendet wird, wobei die Pfaderkennungsanfrage Pfadinformationen trägt, die mehrere zu erkennende Pfade identifizieren (S 101); und
• in Antwort auf die Pfaderkennungsanfrage, Bestimmen der mehreren zu erkennenden Pfade gemäß den Pfadinformationen und Erkennen, ob die mehreren zu erkennenden Pfade verfügbar sind (S 102),
wobei das Verfahren ferner umfasst:
• Aktualisieren eines Erkennungsergebnisses in Echtzeit durch regelmäßiges Erkennen, ob jeder der mehreren zu erkennenden Pfade verfügbar ist,
• wobei die Pfaderkennungsanfrage ferner eine erste Zielkennung, die zur Angabe eines zu erkennenden Zielpfades unter den mehreren zu erkennenden Pfaden verwendet wird, und eine Pfaderkennungsrückmeldungsbedingung trägt, die besagt, dass das aktualisierte Erkennungsergebnis zurückgemeldet wird, wenn sich ein Verfügbarkeitsstatus des zu erkennenden Zielpfades, der mittels der ersten Zielkennung bestimmt wird, ändert, und eine Rückmeldung des aktualisierten Erkennungsergebnisses zum Netzwerk der oberen Schicht erfolgt, wenn das aktualisierte Erkennungsergebnis die Rückmeldungsbedingung erfüllt.

3. Pfaderkennungsverfahren, das durch ein Pfadberechnungselement, PCE, eines Netzwerks einer unteren Schicht durchgeführt wird, wobei das Verfahren umfasst:
• Empfangen einer Pfaderkennungsanfrage, die von einem Netzwerk einer oberen Schicht gesendet wird, wobei die Pfaderkennungsanfrage Pfadinformationen trägt, die mehrere zu erkennende Pfade identifizieren (S 101); und
• in Antwort auf die Pfaderkennungsanfrage, Bestimmen der mehreren zu erkennenden Pfade gemäß den Pfadinformationen und Erkennen, ob die mehreren zu erkennenden Pfade verfügbar sind (S 102),
wobei das Verfahren ferner umfasst:
• Aktualisieren eines Erkennungsergebnisses in Echtzeit durch regelmäßiges Erkennen, ob jeder der mehreren zu erkennenden Pfade verfügbar ist,
• wobei die Pfaderkennungsanfrage ferner eine Zielquantität und eine Pfaderkennungsrückmeldungsbedingung trägt, die besagt, dass das aktualisierte Erkennungsergebnis zum Netzwerk der oberen Schicht zurückzumelden ist, wenn eine Quantität der verfügbaren zu erkennenden Pfaden größer oder gleich der Zielquantität ist, und eine Rückmeldung des aktualisierten Erkennungsergebnisses zum Netzwerk der oberen Schicht erfolgt, wenn das aktualisierte Erkennungsergebnis die Rückmeldungsbedingung erfüllt.

4. Verfahren nach einem der Ansprüche 1 - 3, wobei die Pfadinformationen eine "Label Switched Path", LSP, Kennung umfassen; und
das Bestimmen mehrerer zu erkennender Pfade ein Bestimmen eines gemäß der LSP-Kennung zu erkennenden Pfades umfasst und
das Bestimmen, ob mehrere zu erkennende Pfade verfügbar sind, ein Erkennen, ob der zu erkennende Pfad verfügbar ist, was ein Bestimmen eines LSP gemäß der LSP-Kennung umfasst, und ein Erkennen, ob der LSP verfügbar ist, umfasst.

5. Verfahren nach Anspruch 4, wobei das Erkennen, ob der LSP verfügbar ist, im Speziellen umfasst:
Lernen durch Abfrage einer LSP-Statusdatenbank des PCE, ob der LSP verfügbar ist; oder
das Erkennen, ob der LSP verfügbar ist, im Speziellen umfasst:
Senden einer Anfragenachricht zur Anfrage, einen Status des LSP zu erhalten, zu einem ersten Knoten des Netzwerks einer unteren Schicht, in dem der LSP gelegen ist;
Empfangen des Status des LSP, der durch den ersten Knoten des Netzwerks einer unteren Schicht, in dem der LSP gelegen ist, rückgemeldet wird; und
Lernen, gemäß dem Status des LSP, ob der LSP verfügbar ist.

6. Verfahren nach Anspruch 1, wobei die Pfadinformationen eine Knotenpaarkennung umfassen, die eine Kennung eines Knotenpaares des Netzwerks der oberen Schicht ist, oder eine Kennung eines Grenzknotenpaares des Netzwerks der unteren Schicht, verbunden mit einem Knotenpaar des Netzwerks der oberen Schicht, ist.

7. Pfadberechnungselement, wobei das Pfadberechnungselement konfiguriert und bestimmt ist, eines der Verfahren nach Ansprüchen 1 - 6 auszuführen.

## Revendications

1. Procédé de détection de chemin réalisé par un élément de calcul de chemin (PCE) d'un réseau de couche inférieure, le procédé consistant à :
recevoir une demande de détection de chemin envoyée par un réseau de couche supérieure, la demande de détection de chemin transportant une information de chemin identifiant de multiples chemins à détecter (S201) ;
en réponse à la demande de détection de chemin, déterminer les multiples chemins à détecter selon l'information de chemin, et détecter si les multiples chemins à détecter sont disponibles (S202),
le procédé consistant en outre à :
mettre à jour un résultat de détection en temps réel en détectant régulièrement si chacun des multiples chemins à détecter est disponible,
la demande de détection de chemin transportant en outre des priorités des multiples chemins à détecter et une condition de renvoi de détection de chemin, consistant en ce que le résultat de détection mis à jour doit être renvoyé quand, parmi les multiples chemins à détecter, un chemin à détecter dont la priorité est supérieure à une priorité d'un chemin commuté par étiquette (LSP) transportant actuellement un service est disponible, et à renvoyer le résultat de détection mis à jour au réseau de couche supérieure quand le résultat de détection mis à jour satisfait à la condition de renvoi.

2. Procédé de détection de chemin réalisé par un élément de calcul de chemin (PCE) d'un réseau de couche inférieure, le procédé consistant à :
recevoir une demande de détection de chemin envoyée par un réseau de couche supérieure, la demande de détection de chemin transportant une information de chemin identifiant de multiples chemins à détecter (S101) ; et
en réponse à la demande de détection de chemin, déterminer les multiples chemins à détecter selon l'information de chemin, et détecter si les multiples chemins à détecter sont disponibles (S102),
le procédé consistant en outre à :
mettre à jour un résultat de détection en temps réel en détectant régulièrement si chacun des multiples chemins à détecter est disponible,
la demande de détection de chemin transportant en outre un premier identifiant cible utilisé pour indiquer un chemin à détecter cible parmi les multiples chemins à détecter et une condition de renvoi de détection de chemin, consistant en ce que le résultat de détection mis à jour est renvoyé quand un statut disponible du chemin à détecter cible déterminé au moyen du premier identifiant varie, et à renvoyer le résultat de détection mis à jour au réseau de couche supérieure quand le résultat de détection mis à jour satisfait à la condition de renvoi.

3. Procédé de détection de chemin réalisé par un élément de calcul de chemin (PCE) d'un réseau de couche inférieure, le procédé consistant à :
recevoir une demande de détection de chemin envoyée par un réseau de couche supérieure, la demande de détection de chemin transportant une information de chemin identifiant de multiples chemins à détecter (S101) ; et
en réponse à la demande de détection de chemin, déterminer les multiples chemins à détecter selon l'information de chemin, et détecter si les multiples chemins à détecter sont disponibles (S102),
le procédé consistant en outre à :
mettre à jour un résultat de détection en temps réel en détectant régulièrement si chacun des multiples chemins à détecter est disponible,
la demande de détection de chemin transportant en outre une quantité cible et une condition de renvoi de détection de chemin, consistant en ce que le résultat de détection mis à jour doit être renvoyé au réseau de couche supérieure quand une quantité des chemins à détecter disponibles est supérieure ou égale à la quantité cible, et à renvoyer le résultat de détection mis à jour au réseau de couche supérieure quand le résultat de détection mis à jour satisfait à la condition de renvoi.

4. Procédé selon l'une quelconque des revendications 1 à 3, dans lequel l'information de chemin comprend un identifiant de chemin commuté par étiquette (LSP) ; et
la détermination de multiples chemins à détecter consiste à déterminer un chemin à détecter selon l'identifiant de LSP ; et
la détection de si de multiples chemins à détecter sont disponibles consiste à détecter si le chemin à détecter est disponible, ce qui consiste à déterminer un LSP selon l'identifiant de LSP, et détecter si le LSP est disponible.

5. Procédé selon la revendication 4, dans lequel la détection de si le LSP est disponible consiste spécifiquement à :
apprendre, en interrogeant une base de données de statuts de LSP, si le LSP est disponible ; ou
la détection de si le LSP est disponible consistant spécifiquement à :
envoyer à un premier noeud du réseau de couche inférieure où se trouve le LSP, un message de demande pour demander d'obtenir un statut du LSP ;
recevoir le statut du LSP qui est renvoyé par le premier noeud du réseau de couche inférieure où se trouve le LSP ; et
apprendre, selon le statut du LSP, si le LSP est disponible.

6. Procédé selon la revendication 1, dans lequel l'information de chemin comprend un identifiant de paire de noeuds étant un identifiant d'une paire de noeuds du réseau de couche supérieure, ou un identifiant d'une paire de noeuds de périphérie du réseau de couche inférieure, connectée à une paire de noeuds du réseau de couche supérieure.

7. Élément de calcul de chemin, l'élément de calcul de chemin étant conçu pour réaliser et destiné à réaliser l'un quelconque des procédés selon les revendications 1 à 6.
